# EUROPEAN PATENT SPECIFICATION

(11) **EP 1 395 508 B1**
(45) Date of publication and mention of the grant of the patent: **23.11.2005**
(21) Application number: 02774025.7
(22) Date of filing: 24.05.2002
(51) Int. Cl.: B65G 45/16, B65G 45/12, B65G 45/00, B65G 45/14, B65G 45/18

(54) **SCRAPING AND CLEANING DEVICE FOR CONVEYOR BELTS**
ABSTREIF- UND REINIGUNGSVORRICHTUNG FÜR FÖRDERBÄNDER
DISPOSITIF DE RACLAGE ET DE NETTOYAGE POUR BANDES TRANSPORTEUSES

(30) Priority: 28.05.2001 IT VI20010122
(43) Date of publication of application: 10.03.2004
(73) Proprietor: Dal Ferro, Bortolo Giulio, 36030 Montecchio Precalcino (VI) (IT)
(72) Inventor: Dal Ferro, Bortolo Giulio, 36030 Montecchio Precalcino (VI) (IT)
(74) Representative: Bonini, Ercole
(86) International application number: PCT/EP2002/005729
(87) International publication number: WO 2002/096782

(56) References cited:
- EP-A- 0 574 600
- EP-A- 0 869 090
- WO-A-91/10609
- US-A- 2 794 540
- US-A- 3 841 470

## Description

The invention relates to a scraping and cleaning device for conveyor belts.

It is well known that in the discharge area of conveyor belts, a scraping device is often arranged, in order to make detachment of material carried by the belt easier.

The known scraping devices comprise one or more scraping members supported by a frame applied to holding means, arranged transversally to the conveyor belt and fixed to the structure on which the conveyor belt is resting.

Such scraping members are aligned and juxtaposed to each other and are adhering to the belt to define a contact line making easier detachment of material and its fall by gravit (*e.g*. see: document EP-A-0869090).

The above-mentioned scraping devices of the prior art are however afflicted with some drawbacks.

A first drawback consists in that the scraping and cleaning devices are not provided with adjusting means allowing to modify in a significant way the position of the scraping members so that the contact line may be moved along the belt.

Another drawback consists in that in the scraping devices of the prior art it is possible to arrange the scraping members at the driving drum or the snub drum, but the impossibility to adjust continuously and individually pressure of each scraping member against the belt, does not allow to match the hump-backed profile according to which both the driving drums and the snub drums are shaped.

The present invention aims at overcoming said drawbacks.

More particularly a first object of the invention is to provide a scraping device for conveyor belts consisting of several scraping members, each member being adjustable relative to the conveyor belt in contact with it

Another object is to provide a scraping device providing for the possibility of varying the contact line between the scraping members and the conveyor belt.

Another object is to provide a device having adjusting means allowing to change position and pressure of the scraping members against the conveyor belt.

Still another object of the invention is a device provided with adjusting means allowing to set at the same time the position of all the scraping members against the conveyor belt.

A last but not least object is to provide a device allowing to obtain an elastic contact between the scraping members and the conveyor belt.

The foregoing objects are attained by providing a scraping and cleaning device for conveyor belts the main features of which are according to the main claim.

According to a preferred embodiment the adjusting means consist of a through slot made on each frame and suited to receive a fastening screw for said scraping members.

Alternatively the slot may be replaced by a plurality of through holes made on the frame, each hole being suited to receive the fastening screw for the scraping members.

Still according to a preferred embodiment of the invention, the support structure comprises articulation means allowing the operator to change the position of the contact line to fit the device to the individual features of the conveyor belt.

Such articulation means are preferably consisting of one or more guides defining a corresponding number of translation axes transversal or parallel to the surface to be scraped, corresponding trolleys supporting the frames being slidingly coupled to said guides.

The trolleys are also provided with members blocking their sliding motion in the corresponding guide, allowing the operator to set the scraping members in the optimal position.

Finally the invention provides that elastic elements are interposed between the scraping members and the support structure, said elastic elements preferably consisting of a piece of yielding material such as rubber.

The adjusting means comprise also screws received in threaded through holes made in the frame opposing the back frame connected to the scraping members.

Each scraping member consists of a metal blade of hard metal connected by screws or weldings to the relevant supporting element.

Advantageously the proposed solution allows to arrange the scraping members and therefore the contact line in an optimal position improving the scraping efficiency of the device.

Still advantageously such adjustment possibility is kept even after installation and can be easily carried out also by unskilled workers.

In the same advantageous way the possibility to adjust the position of each scraping blade relative to the conveyor belt allows to set the scraping pressure and to make up for the wear of each scraping blade, keeping the total scraping action on the belt constant.

Again advantageously the possibility to arrange the scraping members in any position, allows to mount the device at the driving drum or the belt snub drum, exactly matching the hump-backed profile according to which each drum is shaped.

Still advantageously the provision of elastic elements allows to make each scraping member yielding, thus avoiding damage and failure either of the belt or the scraping member even in critical conditions.

The foregoing objects and advantages will be better understood from the following description of a preferred embodiment of the invention given as an illustrative but not limiting example and shown in the accompanying sheets of drawings in which:
- FIG. 1 is a front view of the scraping and cleaning device of the invention when applied to a conveyor belt;
- FIG. 2 is a side view of the device of FIG. 1;
- FIG. 3 is a front view of an element of the device of FIG. 1;
- FIG. 4 is a partially sectioned side view of the element of FIG. 3;
- FIGs. 5 and 6 are side views of the device of FIG. 1 in two different working configurations;
- FIG. 7 is a front view of a constructional variation of the element of FIG. 3;
- FIG. 8 is a partially sectioned side view of the element of FIG. 7;
- FIG. 9 is a front view of another element of the device of FIG. 1;
- FIG. 10 is a side view of the element of FIG. 9;
- FIG. 11 is a plan view of the element of FIG. 9;
- FIG. 12 is a side view of the device of FIG. 1 mounted in a different way on a conveyor belt;
- FIGs. 13 and 14 are side views of the device of FIG. 1 in different working configurations;
- FIGs. 15 and 16 are side views of the device of FIG. 1 in a different installation;
- FIGs. 17 and 18 show two further different installations of the device of the invention;
- FIG. 19 is a side view of the device of the invention;
- FiGs. 20 and 21 show details of FIG. 19;
- FIG. 22 is a front view of a constructional variation of the device of the invention;
- FIG. 23 shows another constructional variation of the device of the invention; and
- FIG. 24 shows a different installation configuration of the constructional variation of FIG. 23.

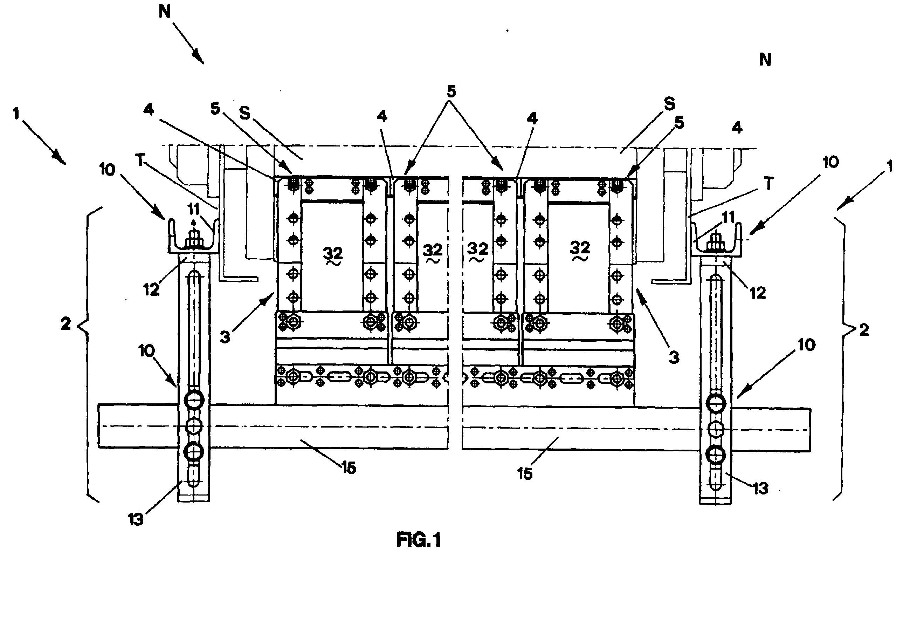

The scraping and cleaning device for conveyor belt N of the present invention is shown in FIG. 1 where it is generally indicated with reference numeral 1.

The device comprises a support shaft 15 fixed to the structure T of belt N, on which several frames 3 are arranged, each frame being provided with a scraping member 4 adhering to the surface S of the belt N to be scraped.

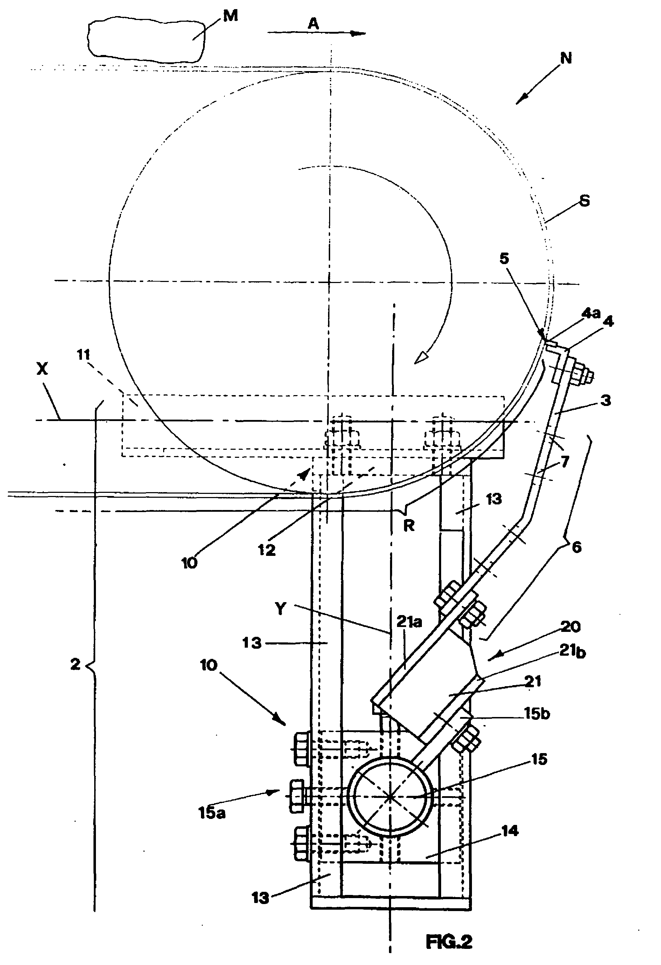

The active portion 4a of each scraping member 4, shown in detail in FIG. 2, is adhering to the surface S of the conveyor belt N and defines together with it a contact line indicated with numeral 5, defining the boundary between the scraped surface R of the belt N and the surface occupied by the carried material M.

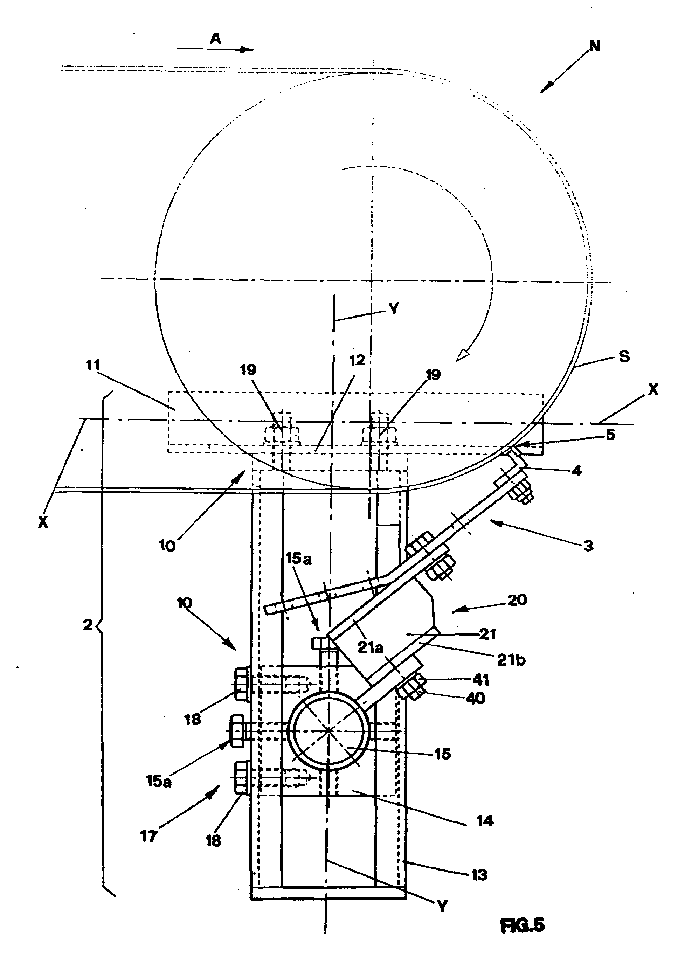

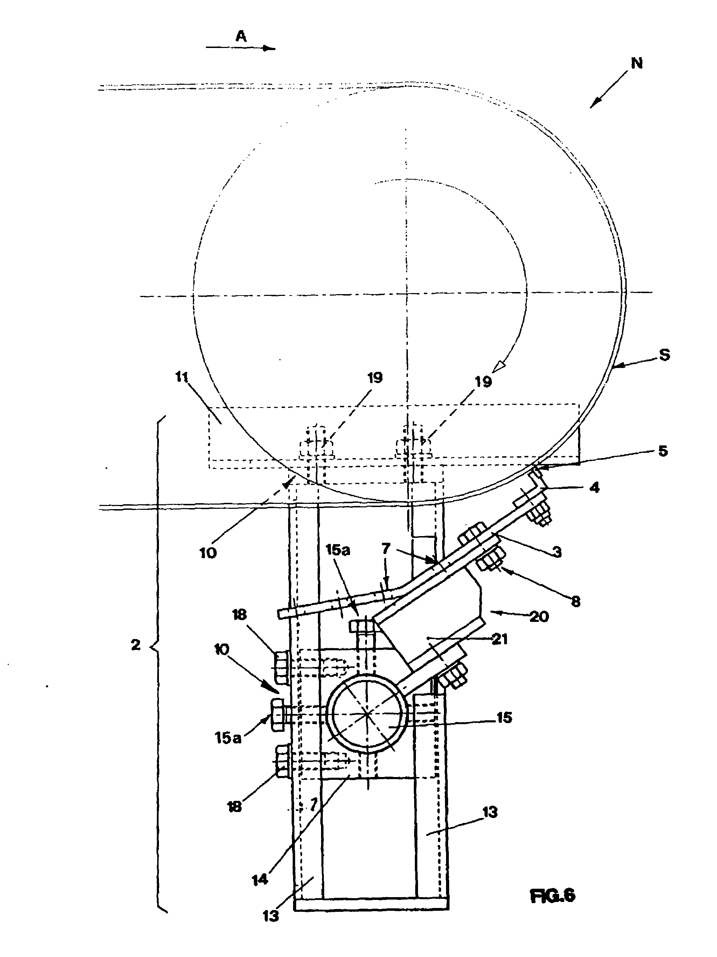

According to the invention the device is provided, as shown in detail in FIGs. 2, 3 and 4, with adjusting means generally indicated with numeral 6 and 10, suited to change in a significant way the position of the contact line 5 along the surface S of the conveyor belt N as shown in FIGs. 5 and 6.

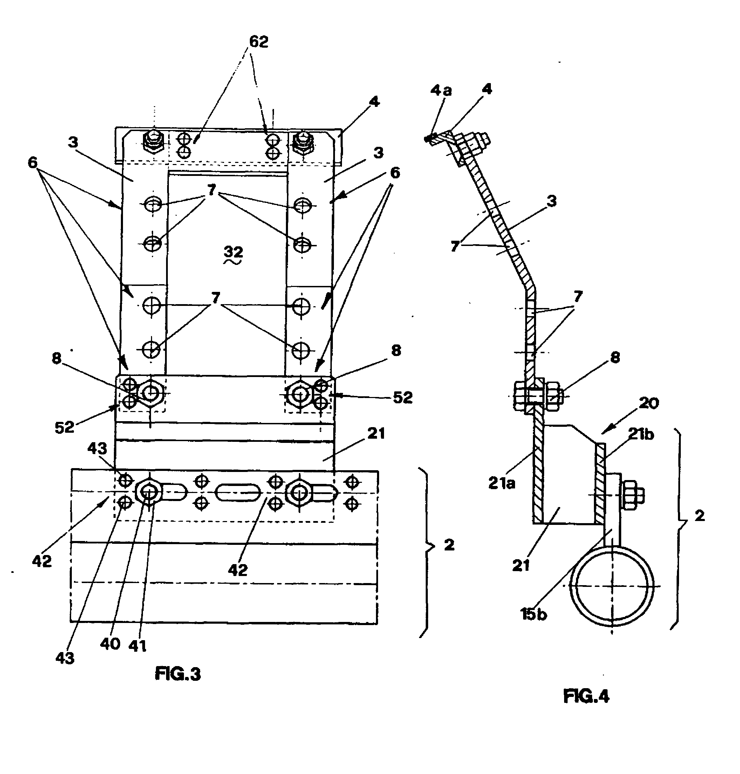

More particularly the adjusting means 6 shown in detail in FIGs. 3 and 4, comprise a plurality of through holes 7 made in each frame 3, suited to receive screws 8 fastening the frame 3 to the support structure 2.

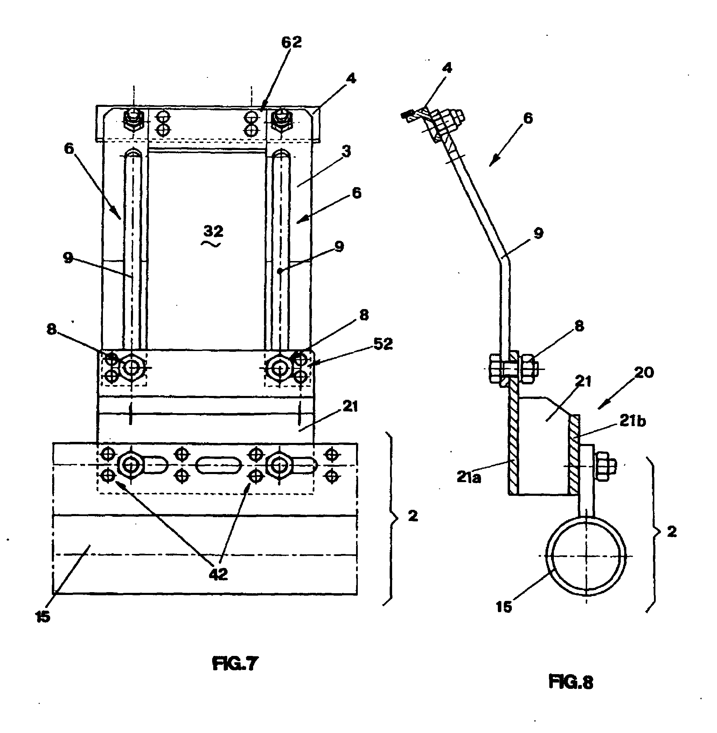

A constructional variation shown in detail in FIGs. 7 and 8 is different from the preceding one because the adjusting means 6 consist of a couple of through slots 9 made on each frame 3, each slot being suited to receive said fastening screws 8 to the support structure 2.

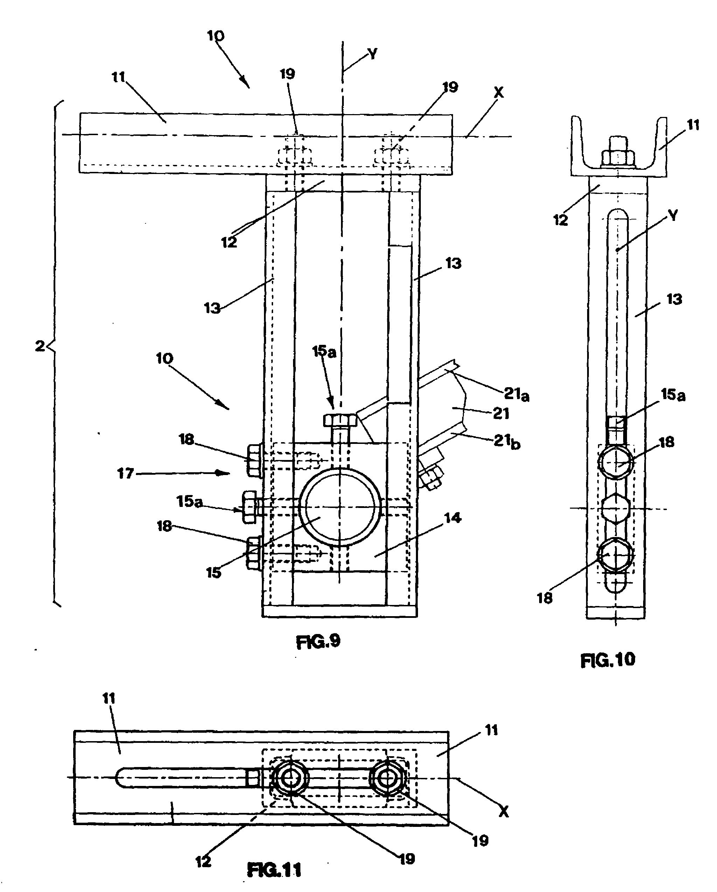

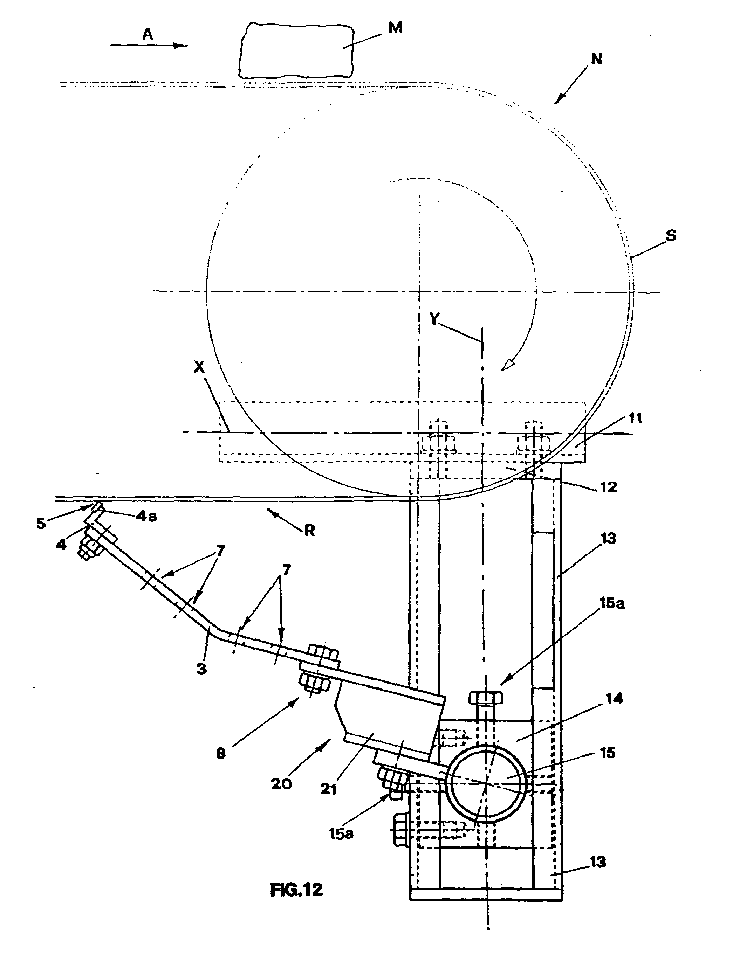

As to the adjusting means indicated with numeral 10 they comprise, as shown in detail in FIGs. 9, 10 and 11, a first guide 11 anchored to the structure T of belt N, said guide defining a first translation axis X generally parallel to the advancement direction A of belt N, to which a first saddle 12 supporting a second guide 13 is slidingly coupled.

The second guide 13 defines a second translation axis Y generally orthogonal to the surface S to be scraped, a second saddle 14 being slidingly coupled to said guide, said second saddle 14 supporting the shaft 15 arranged transversally to the advancement direction A of belt N.

Shaft 15 supports the frames 3 on which the scraping members 4 are arranged, said members being aligned and juxtaposed to each other along a direction generally transversal to the advancement direction A of belt N.

It is important to note that the saddle 14 is provided with a fastening unit consisting of a plurality of blocking screws 15a preventing rotation of shaft 15, this allowing the operator to select on installation the working position of the scraping members 4 as a function of the features of the belt N to which the device of the invention is being applied.

More particularly the installation shown in FIG. 12 is different from the preceding ones because shaft 15 was rotated and blocked in such a way that the scraping members 4 are arranged along the return stretch R of the belt N.

With regard to saddles 12 and 14, they are provided with blocking elements generally indicated with numeral 17, consisting in this embodiment of a couple of nuts 19 and screws 18 that suitably tightened, prevent movement of the saddles 12 and 14 in the corresponding guides, so as to block the scraping members 4 in the selected position.

It is also to be noted that elastic elements 20 are interposed between frames 3 and shaft 15, suited to make yielding the contrast of each scraping member 4 against surface S of the conveyor belt N.

Said elastic elements 20 consist of a piece 21 of yielding material preferably made of rubber.

More particularly one can see for instance in FIG. 2 that the piece 21 of yielding material is arranged between a couple of plates 21a, 22b, the latter being connected to an appendage 15b of shaft 15. The connection of each frame 3 to shaft 15 is obtained as shown for instance in FIG. 3, connecting each plate 21b to the appendage 15b through a couple of screws 40 each provided with a corresponding nut 41.

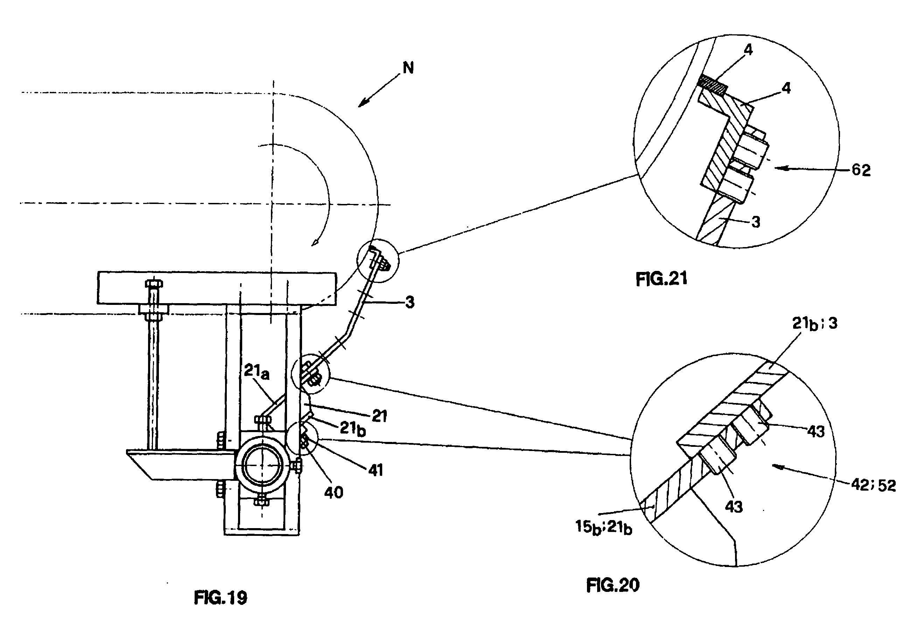

Near each screw 40 further adjusting means are arranged, generally indicated with numeral 42 and to be seen in greater detail in FIGs. 19 to 21, consisting of grub screws 43 screwed in threaded holes 44 made in the appendage 15b, the screw ends being forced against the plate 21b when they are screwed in the corresponding holes.

In this way before tightening the nut 41 on the corresponding screw 40, through the grub screws 43 a fine adjustment of the position of the active portion 4a of each scraping member 4 against the surface S of the conveyor belt N is carried out.

Further adjustment units of the just described kind and generally indicated with numerals 52 and 62 are also provided at the connection point of each frame 3 to the elastic elements 20 and of each frame 3 to the scraping member 4, respectively.

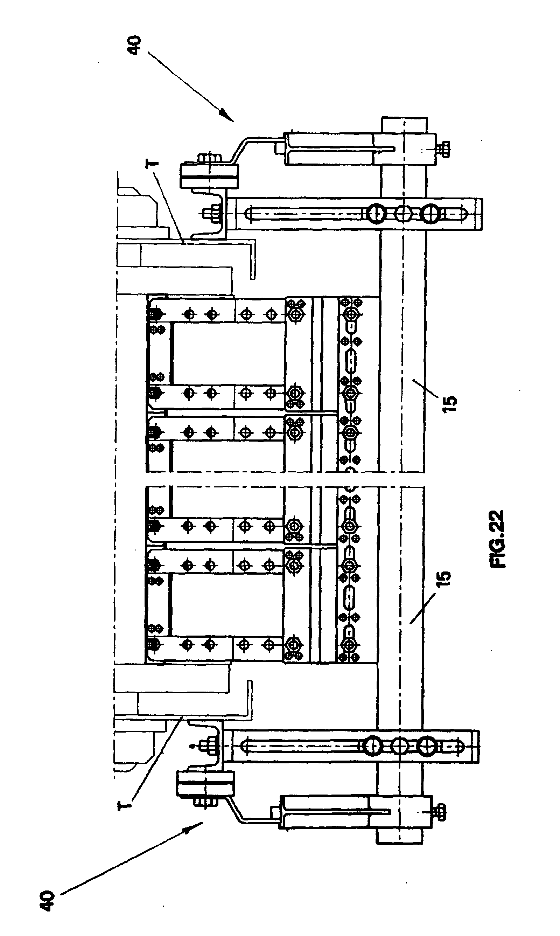

As an alternative or in addition to said elements 20, the device of the invention may be provided as shown in detail in FIG. 22, with a hydraulic or mechanical dampening unit 40 interposed between structure T and shaft 15. The dampening unit 40 comprises devices known per se and therefore not described hereinafter, suited to absorb the pressure on the belt N.

In the described configuration, the installation of the device provides that shaft 15 is free to rotate on its supports, being opposed by the dampening unit. With regard to frames 3, each frame consists of a plate having a through hole 32 suited to allow passage of material M that the scraping members 4 remove from the conveyor belt N.

The installation of the scraping and cleaning device of the invention prescribes that the operator first proceeds to fastening the first guide 11 to the support structure 2 of conveyor belt N.

Subsequently the operator proceeds to a first rough positioning of frames 3 with the scraping members 4 applied to them, acting on the articulation means 10.

Then the operator releases saddles 12 and 14 so as to move members 4 back and forth along axis X and up and down along axis Y, until they are placed along a contact line adhering to the belt N, selected by the operator as a function of the features of both the belt and the carried material.

Finally after having blocked saddles 12 and 14 acting on nuts 19 and screws 18, the operator proceeds to define positioning of members 4 first rotating shaft 15 so as to put the members 4 adhering against the belt N and then acting on the adjusting means 6 until a perfect adhesion is obtained.

It is to be noted that acting both on the adjusting means 6 and the articulation means 10 and rotating shaft 15 as well, the operator may control also pressure exerted by each member 4 on the surface S thus varying efficiency of the scraping action.

Finally acting on the grub screws 43 of the further adjustment units 42, 52 and 62, the operator carries out the fine regulation of the pressure of the active portion 4a of each scraping member 4 against the conveyor belt N.

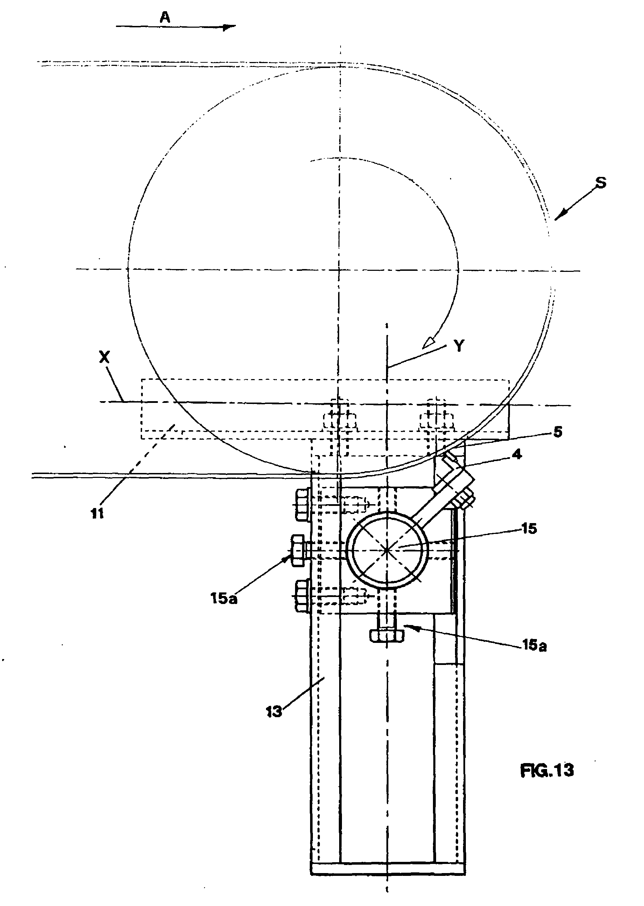

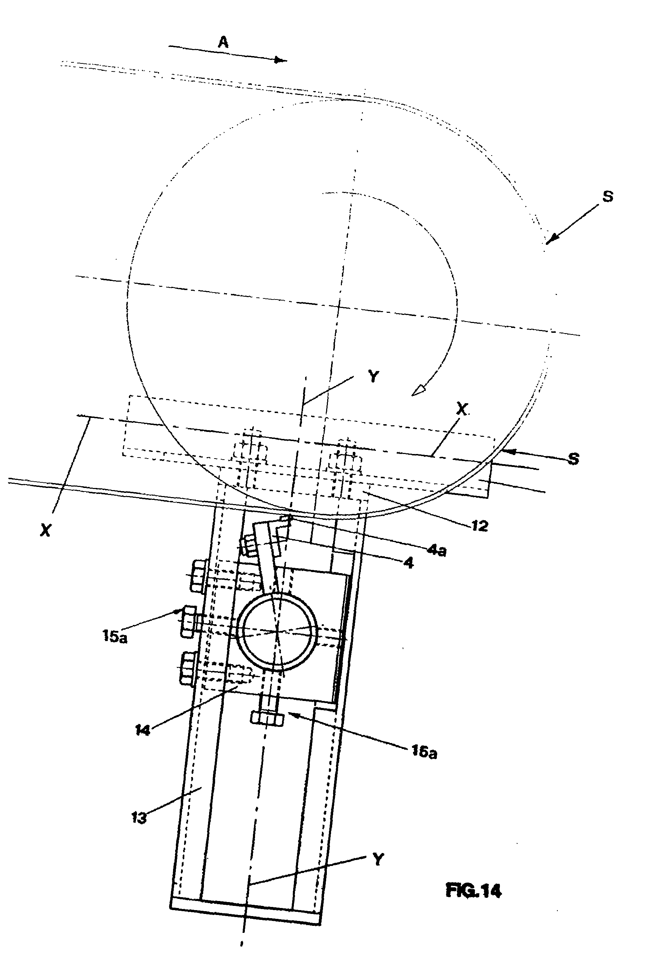

The installation shown in FIGs. 13 and 14 is different from the preceding one because the scraping members 4 are fixed directly to the support structure 2 instead of being fixed to frames 3.

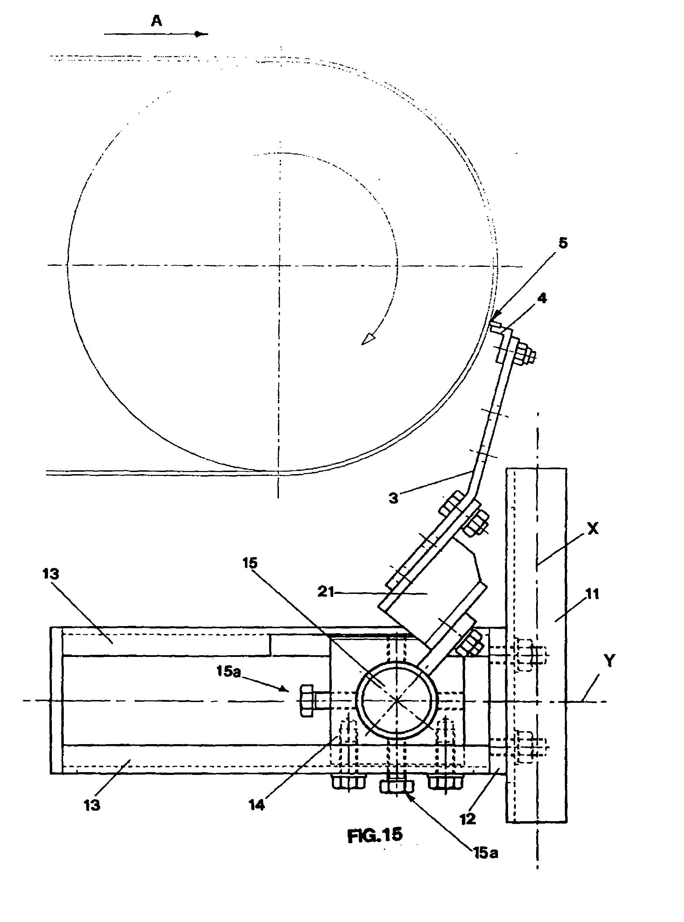

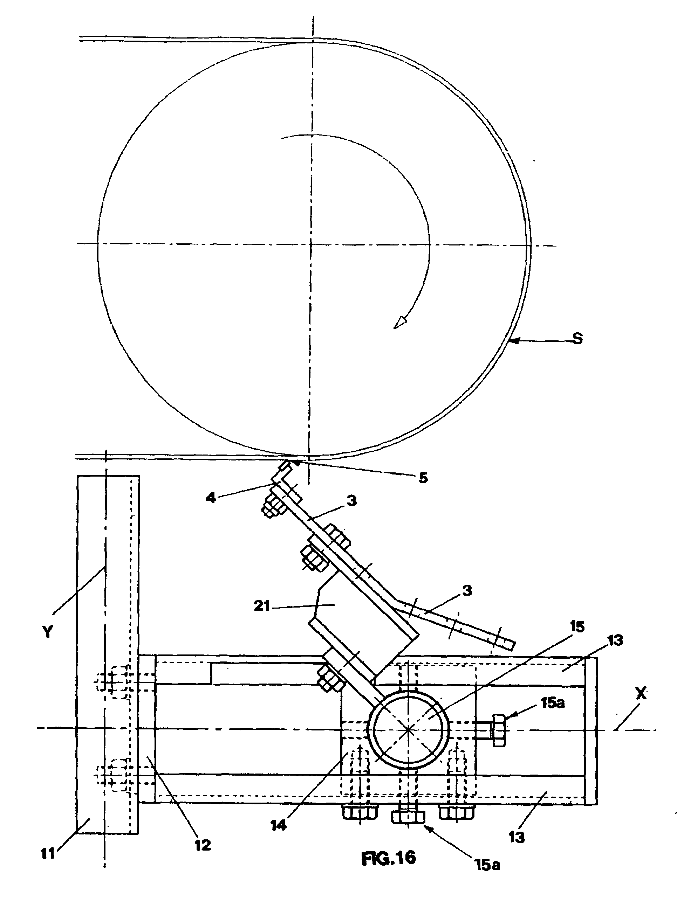

It is important also to note that the articulation means 10 allow to mount the device by arranging the displacement axes X, Y along any desired direction so as to match the different types of installation of the conveyor belt N, as illustrated for instance in the applications shown in FIGs. 15 and 16.

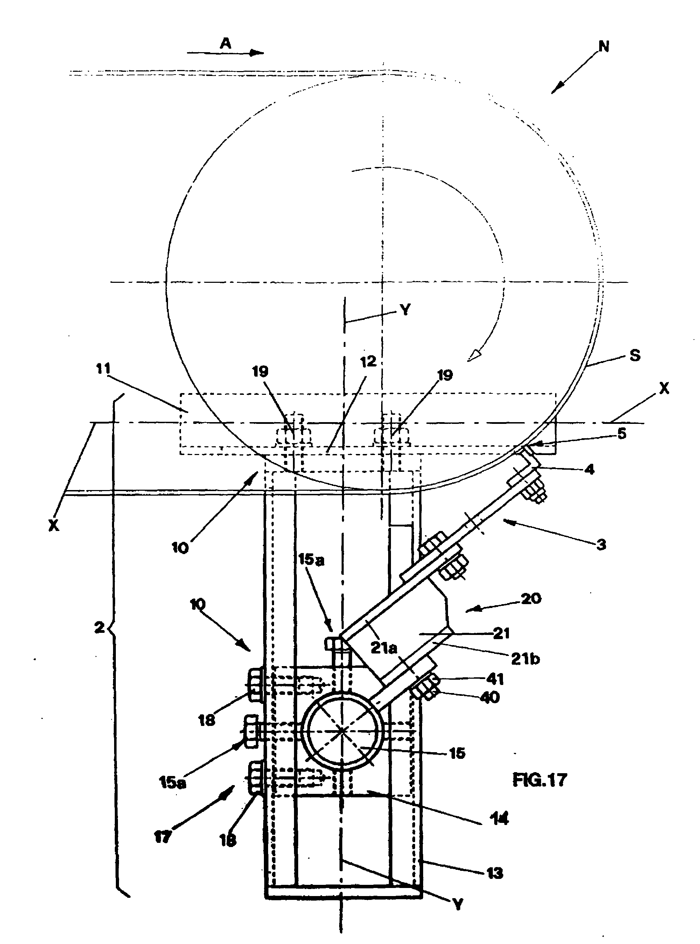

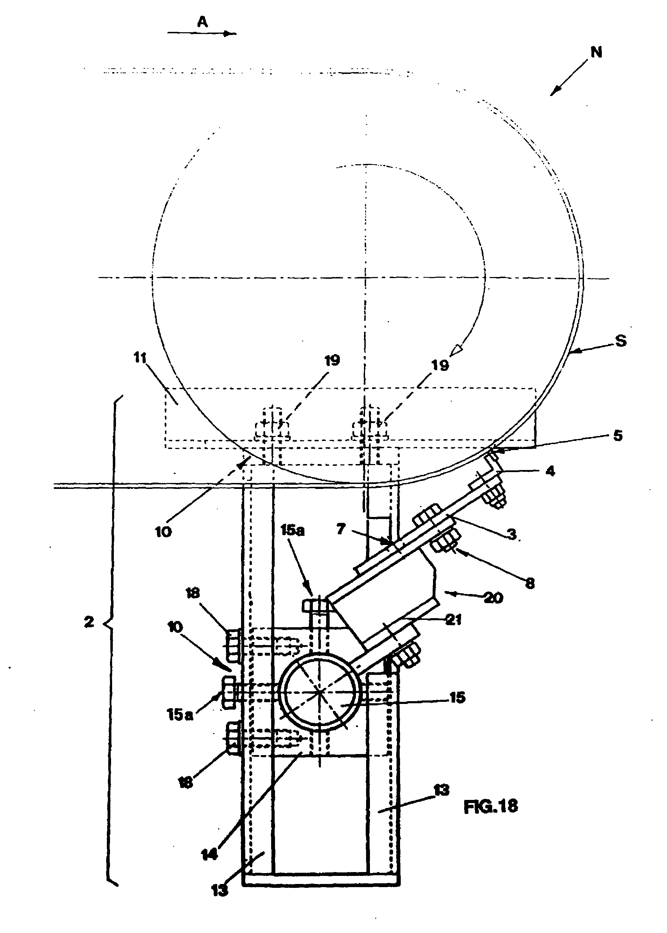

FIGs. 17 and 18 show two further application variations of the scraping and cleaning device of the invention.

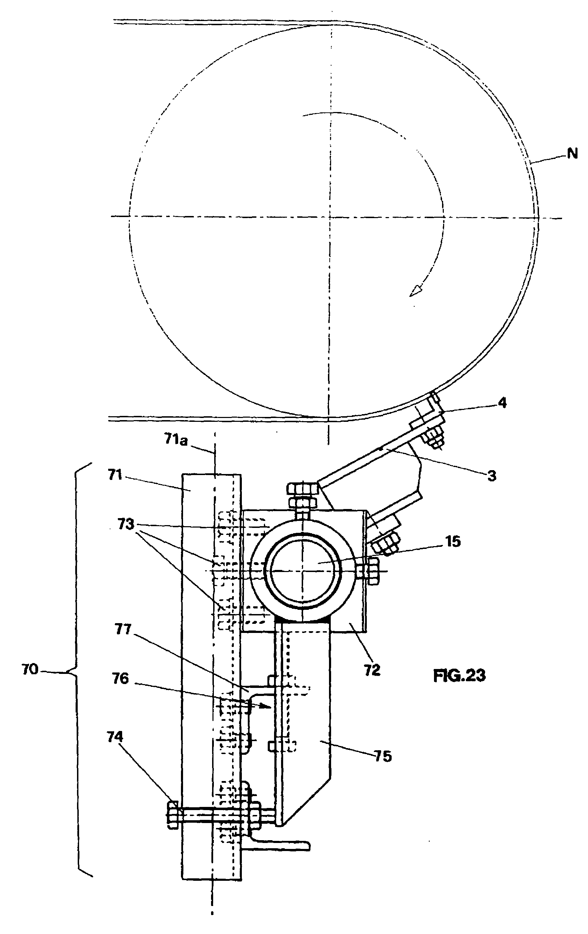

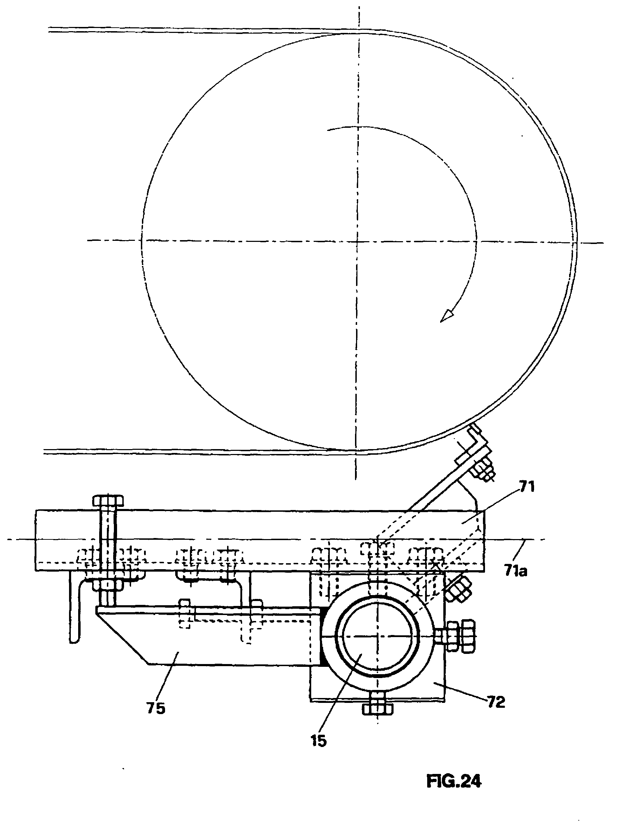

FIGs. 23 and 24 show two different operative positions of a further constructional variation of the scraping and deaning device of the invention, which is different from the versions previously shown and described because the adjusting means, generally indicated with numeral 70, comprise a guide 71 arranged with the longitudinal axis 71a vertically, a saddle 72 being slidingly coupled to said guide and supporting the shaft 15 on which the frames 3 with relevant scraping members 4 are fixed.

Blocking means such as screws 73, are fixing the saddle 72 in the desired position in which the scraping member 4 is in contact with the conveyor belt N.

Pressure of the scraping members 4 against the belt N, is regulated by screws 74 coupled to guide 71 forcing it against a bar 75 fixed to shaft 15. Moreover another screw 76 is also provided, supported by a bracket 77 held by guide 71, suited to carry out the fine adjustment of saddle 72.

The application version shown in FIG. 24 has the guide 71 arranged with the longitudinal axis 71a horizontally instead of vertically.

From the foregoing it is clear that the proposed device achieves the intended objects.

Atthough the invention was described with references to the figures of the annexed drawings, it may undergo in the constructional stage, modifications falling within the same inventive conception stated in the appended claims and therefore protected by the present patent

## Claims

1. A scraping and cleaning device (1) for conveyor belts (N) comprising a support shaft (15) arranged transversally to said belt (N) on which one or more frames (3) are applied, each of said frames being provided with scraping members (4) adhering to the surface (S) to be scraped of said belt (N) to define on it at least a contact line (5), **characterized in that** it is provided with adjusting means (10) suited to vary the position of said contact line (5), said adjusting means (10) comprising at least a first guide (11) to which a first saddle (12) is slidingly coupled supporting a second guide (13) on which at least a second saddle (14) supporting said shaft (15) is moving, said guides (11, 13) being suited to define two mutually incident translation directions (X, Y) for said saddles (12, 14).

2. The device according to claim 1) **characterized in that** said translation directions (X, Y) are mutually orthogonal, the one (X) being generally parallel to the advancement direction (A) of said belt (N) and the other (Y) being generally orthogonal to the surface (S) of said belt (N).

3. The device (1) according to claim 1) **characterized in that** said saddles (12, 14) are provided with elements (17) blocking their sliding movement in said guides (11,13).

4. The device (1) according to claim 1) **characterized in that** it comprises a plurality of through holes (7) made in each of said one or more frames (3), suited to receive fastening means (8) of said frames (3) to said shaft (15).

5. The device (1) according to claim 1) **characterized in that** it comprises through slots (9) made in each of said one or more frames (3), suited to receive one or more fastening means (8) for said frames (3) to said shaft (15).

6. The device (1) according to claim 4) or 5) **characterized in that** said fastening means are screws or bolts.

7. The device (1) according to any of the preceding claims **characterized in that** elastic elements (20) are interposed between said frames (3) and said shaft (15), suited to make a yielding contrast of said scraping members (4) against the surface (S) of said conveyor belt (N).

8. The device (1) according to claim 7) **characterized in that** said elastic elements (20) consist of pieces (21) of yielding material.

9. The device (1) according to claim 8) **characterized in that** said piece (21) of yielding material is made of rubber.

10. The device (1) according to claim 7) **characterized in that** said elastic elements (20) consist of springs.

11. The device (1) according to claim 7) **characterized in that** said elastic elements consist of fluidic elements.

12. The device (1) according to any of the preceding claims **characterized in that** said scraping members (4) are aligned and juxtaposed to each other along a direction generally transversal to the advancement direction (A) of said belt (N) to be scraped.

13. The device (1) according to any of the preceding claims **characterized in that** said frames (3) have one or more through holes (32) suited to allow passage of material that said scraping members (4) remove from said conveyor belt (N).

14. The device (1) according to any of the preceding claims **characterized by** being provided with a dampening unit (40) interposed between said shaft (15) and the support structure (T) of said device (1), suited to oppose the free rotation of said shaft (15).

15. The device (1) according to claim 7) **characterized by** comprising further adjusting means (42) interposed between each elastic means (20) and said shaft (15).

16. The device (1) according to claim 7) **characterized by** comprising further adjusting means (52) interposed between each of said frames (3) and said elastic elements (20).

17. The device (1) according to claim 7) **characterized by** comprising further adjusting means (62) interposed between each of said frames (3) and the corresponding scraping members (4).

18. The device (1) according to any of claims from 15) to 17) **characterized in that** said further adjusting means (42, 52, 62) consist of grub screws (43) coupled to corresponding threaded holes.

## Patentansprüche

1. Eine Abstreich- und Reinigungsvorrichtung (1) für Förderbänder (N), eine Tragwelle (15) umfassend, die quer zum Band (N) positioniert ist, auf dem ein oder mehrere Rahmen (3) angebracht sind, wobei jeder dieser Rahmen mit Abstreichelementen (4) versehen ist, welche an der abzustreichenden Fläche (S) des Bands (N) anliegen, um auf diesem wenigstens eine Kontaktlinie (5) zu definieren, **dadurch gekennzeichnet, dass** sie mit Reguliermitteln (10) versehen ist, die geeignet sind, die Position der Kontaktlinie (5) zu verändern, wobei diese Reguliermittel (10) wenigstens eine erste Führung (11) umfassen, an der ein erster Sattel (12) gleitend gekuppelt ist und eine zweite Führung (13) stützt, auf der sich wenigstens ein zweiter, die Welle (15) stützender Sattel (14) bewegt, wobei die Führungen (11, 13) geeignet sind, zwei winklig zueinander verlaufende Verfahrrichtungen (X, Y) für die Sättel (12, 14) zu bestimmen.

2. Die Vorrichtung gemäß Patentanspruch 1), **dadurch gekennzeichnet, dass** die Verfahrrichtungen (X, Y) orthogonal zueinander stehen, wobei die eine (X) im Wesentlichen parallel zur Laufrichtung (A) des Bands (N) und die andere (Y) im Wesentlichen orthogonal zur Oberfläche (S) des Bands (N) steht.

3. Die Vorrichtung (1) gemäß Patentanspruch 1), **dadurch gekennzeichnet, dass** die Sättel (12, 14) Elemente (17) aufweisen, die ihre Gleitbewegung in den Führungen (11, 13) blockieren.

4. Die Vorrichtung (1) gemäß Patentanspruch 1), **dadurch gekennzeichnet, dass** sie eine Vielzahl Durchgangsbohrungen (7) in jedem des wenigstens einen bzw. der mehreren Rahmen (3) aufweist, die geeignet sind, Befestigungsmittel (8) für die Rahmen (3) an der Welle (15) aufzunehmen.

5. Die Vorrichtung (1) gemäß Patentanspruch 1), **dadurch gekennzeichnet, dass** sie Durchgangsschlitze (9) in jedem des wenigstens einen bzw. der mehreren Rahmen (3) aufweist, die geeignet sind, ein oder mehrere Befestigungsmittel (8) für die Rahmen (3) an der Welle (15) aufzunehmen.

6. Die Vorrichtung (1) gemäß Patentanspruch 4) oder 5), **dadurch gekennzeichnet, dass** die Befestigungsmittel Schrauben oder Bolzen sind.

7. Die Vorrichtung (1) gemäß eines jeden der vorstehenden Patentansprüche, **dadurch gekennzeichnet, dass** zwischen den Rahmen (3) und der Welle (15) elastische Mittel (20) eingefügt sind, die geeignet sind, einen nachgebenden Kontrast der Abstreichelemente (4) gegen die Fläche (S) des Förderbands (N) zu erzeugen.

8. Die Vorrichtung (1) gemäß Patentanspruch 7), **dadurch gekennzeichnet, dass** die elastischen Mittel (20) aus Stücken (21) nachgebenden Materials bestehen.

9. Die Vorrichtung (1) gemäß Patentanspruch 8), **dadurch gekennzeichnet, dass** das Stück (21) nachgebenden Materials aus Gummi besteht.

10. Die Vorrichtung (1) gemäß Patentanspruch 7), **dadurch gekennzeichnet, dass** die elastischen Mittel (20) aus Federn bestehen.

11. Die Vorrichtung (1) gemäß Patentanspruch 7), **dadurch gekennzeichnet, dass** die elastischen Mittel (20) aus Fluidelementen bestehen.

12. Die Vorrichtung (1) gemäß eines jeden der vorstehenden Patentansprüche, **dadurch gekennzeichnet, dass** die Abstreichelemente (4) aufeinander ausgerichtet und nebeneinander positioniert sind entlang einer im Wesentlichen quer zur Laufrichtung (A) des abzustreichenden Bands (N) verlaufenden Richtung.

13. Die Vorrichtung (1) gemäß eines jeden der vorstehenden Patentansprüche, **dadurch gekennzeichnet, dass** die Rahmen (3) eine oder mehrere Durchgangsbohrungen (32) aufweisen, durch welche das Material, das die Abstreichelemente (4) vom Förderband (N) abtragen, passieren kann.

14. Die Vorrichtung (1) gemäß eines jeden der vorstehenden Patentansprüche, **dadurch gekennzeichnet, dass** sie mit einer Dämpfeinheit (40) ausgerüstet ist, die sich zwischen der Welle (15) und der Tragstruktur (T) der Vorrichtung (1) befindet und dazu dient, der freien Drehung der Welle (15) entgegenzuwirken.

15. Die Vorrichtung (1) gemäß Patentanspruch 7), **dadurch gekennzeichnet, dass** sie weitere Reguliermittel (42) umfasst, die sich zwischen jedem der elastischen Mittel (20) und der Welle (15) befinden.

16. Die Vorrichtung (1) gemäß Patentanspruch 7), **dadurch gekennzeichnet, dass** sie weitere Reguliermittel (52) umfasst, die sich zwischen jedem der Rahmen (3) und den elastischen Mitteln (20) befinden.

17. Die Vorrichtung (1) gemäß Patentanspruch 7), **dadurch gekennzeichnet, dass** sie weitere Reguliermittel (62) umfasst, die sich zwischen jedem der Rahmen (3) und den entsprechenden Abstreichelementen (4) befinden.

18. Die Vorrichtung (1) gemäß eines jeden der Patentansprüche von 15) bis 17), **dadurch gekennzeichnet, dass** die weiteren Reguliermittel (42, 52, 62) aus Gewindestiften (43) bestehen, die mit entsprechenden Gewindebohrungen gekuppelt sind.

## Revendications

1. Un dispositif racleur et nettoyeur (1) pour bandes transporteuses (N) comprenant un arbre-support (15) positionné de manière transversale par rapport à ladite bande (N) sur laquelle un ou plusieurs châssis (3) sont appliqués, chacun desdits châssis étant équipé d'éléments racleurs (4) adhérant à la surface (S) à racler de ladite bande (N) pour définir sur celle-ci au moins une ligne de contact (5), **caractérisé en ce qu'**il est équipé de moyens de réglage (10) indiqués pour varier la position de ladite ligne de contact (5), lesdits moyens de réglage (10) comprenant au moins un premier guidage (11) auquel un premier coulisseau (12) est accouplé de manière coulissante supportant un deuxième guidage (13) sur lequel bouge au moins un deuxième coulisseau (14) supportant ledit arbre-support (15), lesdits guidages (11, 13) étant indiqués pour définir deux directions de translation mutuellement incidentes (X, Y) pour lesdits coulisseaux (12, 14).

2. Le dispositif selon la revendication 1) **caractérisé en ce que** lesdites directions de translation (X, Y) sont mutuellement orthogonales, une direction (X) étant généralement parallèle à la direction d'avance (A) de ladite bande (N) et l'autre direction (Y) étant généralement orthogonale à la surface (S) de ladite bande (N).

3. Le dispositif (1) selon la revendication 1) **caractérisé en ce que** lesdits coulisseaux (12, 14) sont munis d'éléments (17) aptes à bloquer leur mouvement de coulissement dans lesdits guidages (11, 13).

4. Le dispositif (1) selon la revendication 1) **caractérisé en ce qu'**il comprend une pluralité de trous passants (7) réalisés sur chacun desdits un ou plusieurs châssis (3), indiqués pour recevoir des moyens de fixation (8) desdits châssis (3) audit arbre (15).

5. Le dispositif (1) selon la revendication 1) **caractérisé en ce qu'**il comprend des fentes passantes (9) réalisées sur chacun desdits un ou plusieurs châssis (3) indiquées pour recevoir un ou plusieurs moyens de fixation (8) pour lesdits châssis (3) audit arbre (15).

6. Le dispositif (1) selon la revendication 4) ou 5) **caractérisé en ce que** lesdits moyens de fixation sont des vis et des boulons.

7. Le dispositif (1) selon l'une quelconque des revendications précédentes **caractérisé en ce que** des éléments élastiques (20) sont interposés entre lesdits châssis (3) et ledit arbre (15), indiqués pour produire un contraste souple desdits éléments racleurs (4) contre la surface (S) de ladite bande transporteuse (N).

8. Le dispositif (1) selon la revendication 7) **caractérisé en ce que** lesdits éléments élastiques (20) consistent de pièces (21) en matériel souple.

9. Le dispositif (1) selon la revendication 8) **caractérisé en ce que** ladite pièce (21) en matériel souple est réalisée en caoutchouc.

10. Le dispositif (1) selon la revendication 7) **caractérisé en ce que** lesdits éléments élastiques (20) consistent de ressorts.

11. Le dispositif (1) selon la revendication 7) **caractérisé en ce que** lesdits éléments élastiques consistent d'éléments contenant des fluides.

12. Le dispositif (1) selon l'une quelconque des revendications précédentes **caractérisé en ce que** lesdits éléments racleurs (4) sont alignés et juxtaposés l'un par rapport à l'autre le long d'une direction généralement transversale à la direction d'avance (A) de ladite bande (N) à racler.

13. Le dispositif (1) selon l'une quelconque des revendications précédentes **caractérisé en ce que** lesdits châssis (3) ont un ou plusieurs trous passants (32) indiqués pour permettre le passage de matériel que lesdits éléments racleurs (4) enlèvent de ladite bande transporteuse (N).

14. Le dispositif (1) selon l'une quelconque des revendications précédentes **caractérisé en ce qu'**il est équipé d'une unité d'amortissement (40) interposée entre ledit arbre (15) et la structure de support (T) dudit dispositif (1), indiquée pour opposer la rotation libre dudit arbre (15).

15. Le dispositif (1) selon la revendication 7) **caractérisé en ce qu'**il comprend des moyens de réglage ultérieurs (42) interposés entre chaque élément élastique (20) et ledit arbre (15).

16. Le dispositif (1) selon la revendication 7) **caractérisé en ce qu'**il comprend des moyens de réglage ultérieurs (52) interposés entre chacun desdits châssis (3) et lesdits éléments élastiques (20).

17. Le dispositif (1) selon la revendication 7) **caractérisé en ce qu'**il comprend des moyens de réglage ultérieurs (62) interposés entre chacun desdits châssis (3) et les éléments racleurs correspondants (4).

18. Le dispositif (1) selon l'une quelconque des revendications 15) à 17) **caractérisé en ce que** lesdits moyens de réglage ultérieurs (42, 52, 62) consistent de grains de référence (43) accouplés à des trous filetés correspondants.
